# EUROPEAN PATENT APPLICATION

(11) **EP 2 804 240 A1**
(43) Date of publication of application: **19.11.2014**
(21) Application number: 13736146.5
(22) Date of filing: 08.01.2013
(51) Int. Cl.: H01M 4/139, H01M 2/16, H01M 10/0585

(54) **METHOD FOR MANUFACTURING PACKED ELECTRODE, PACKED ELECTRODE, SECONDARY BATTERY, AND HEAT SEALING MACHINE**

(30) Priority: 12.01.2012 JP 2012004211
(71) Applicant: NISSAN MOTOR CO., LTD., Yokohama-shi, Kanagawa 221-0023 (JP)
(72) Inventor: WAKAI, Kouhei, Atsugi-shi Kanagawa 243-0123 (JP); HISAJIMA, Kazumi, Atsugi-shi Kanagawa 243-0123 (JP); KIM, Taewon, Atsugi-shi Kanagawa 243-0123 (JP); NAKAI, Miyuki, Atsugi-shi Kanagawa 243-0123 (JP); SAWADA, Yasuhiro, Atsugi-shi Kanagawa 243-0123 (JP)
(74) Representative: Hoefer & Partner
(86) International application number: PCT/JP2013/050104
(87) International publication number: WO 2013/105548

(57) **Abstract**

In a method for manufacturing a packed electrode, an electrode is set between two separation layers that are made of resin, a heat-resistant layer is set between at least one of the two separation layers and the electrode, the two separation layers, the electrode and the heat-resistant layer, an overlapped portion of the two separation layers overlapped with the heat-resistant layer interposed therebetween is pinched, pressed and heated by a pair of heat sealing chips at an outside of the electrode, and the two separation layers are fastened by destroying the heat-resistant layer at the overlapped portion that are pressed and heated. According to the above manufacturing method, man-hours required for stacking can be reduced by integrating the heat-resistant layer with the packed electrode.

## Description

### TECHNICAL FIELD

The present invention relates to a method for manufacturing a packed electrode, and relates to a packed electrode, a secondary battery and a heat sealing machine. In more detail, the present invention relates to a method for manufacturing a packed electrode in which an electrode is packed in a separator envelope, and relates to a packed electrode manufactured by the manufacturing method, a secondary battery making use of the packed electrode, and a heat sealing machine used for manufacturing the packed electrode.

### BACKGROUND ART

Known is a secondary battery in which a packed cathode (a cathode electrode packed in a separator envelope), a heat-resistance layer and a packed anode (an anode electrode packed in a separator envelope) are stacked sequentially (Patent Literature 1).

### CITATION LIST

### PATENT LITERATURE

Patent Literature 1: Japanese Examined Patent Publication No. 3584583

### SUMMARY OF INVENTION

In the above-mentioned secondary battery, two sheets of separators are fastened (heat-sealed) with each other when making an envelope separator of a packed cathode or a packed electrode, but it is required to pay attentions so as not to cause fastening (heat sealing) failures of the two sheets of separators because a heat-resistance layer is also stacked.

Therefore, an object of the present invention is to provide a method for manufacturing a packed electrode, a packed electrode, a secondary battery and a heat sealing machine, according to each of which separators of the packed electrode can be fastened surely.

A first aspect of the present invention provides a method for manufacturing a packed electrode, the method comprising: setting an electrode between two separation layers that are made of resin; setting a heat-resistant layer between at least one of the two separation layers and the electrode; stacking the two separation layers, the electrode and the heat-resistant layer; pinching, pressing and heating, by a pair of heat sealing chips at an outside of the electrode, an overlapped portion of the two separation layers overlapped with the heat-resistant layer interposed therebetween; and fastening the two separation layers by destroying the heat-resistant layer at the overlapped portion that are pressed and heated.

A second aspect of the present invention provides a packed electrode, comprising: two separation layers that are made of resin; an electrode set between the two separation layers; and two heat-resistant layers set between the two separation layers and the electrode, respectively, wherein a fastened portion is formed at an overlapped portion, outside the electrode, of the two separation layers overlapped with the heat-resistant layer interposed therebetween, the heat-resistant layer being destroyed and the two separation layers being fastened with each other at the fastened portion.

A third aspect of the present invention provides a secondary battery comprising: a power-generation element formed by stacking a packed electrode according to the above second aspect and an electrode having polarity different from polarity of the packed electrode.

A fourth aspect of the present invention provides a heat sealing machine comprising: at least one pair of heat sealing chips used for a method for manufacturing a packed electrode according to the above first aspect, wherein a rugged surface is formed on a surface of at least one of the at least one pair of heat sealing chips.

### BRIEF DESCRIPTION OF DRAWINGS

[Fig. 1] It is a perspective view showing an appearance of a secondary battery according to an embodiment.
[Fig. 2] It is an exploded perspective view of the secondary battery.
[Fig. 3] (A) is a plan view of a packed cathode (packed electrode) in the secondary battery, and (B) is a cross-sectional view taken along a line IIIB-IIIB in (A).
[Fig. 4] It is a plan view of an anode in the secondary battery.
[Fig. 5] It is an enlarged cross-sectional view of the secondary battery.
[Fig. 6] (A) is a schematic plan view of a heat sealing machine according to an embodiment, and (B) is a side view of the heat sealing machine.
[Fig. 7] (A) is a plan view of a heat sealing chip, (B) is a side view of the heat sealing chip, and (C) is a front view of the heat sealing chip.
[Fig. 8] (A) is an enlarged cross-sectional view showing a pre-pressurization state where two sheets of separators are pinched by the heat sealing heads of the head sealing machine, and (B) is an enlarged cross-sectional view showing an during-pressurization state.
[Fig. 9] (A) is a photo showing a cutting plane of a heat sealed portion of a packed cathode, (B) is an enlarged photo of a portion IXB in (A), (C) is a further enlarged photo of a portion IXC in (B), and (D) is a further enlarged photo of a portion IXD in (B)
[Fig. 10] It is an explanatory diagram of a method for a peeling test.
[Fig. 11] (A) is a photo showing a surface of a heat sealed portion, and (B) is an enlarged photo of (A).
[Fig. 12] It is a photo showing a heat sealing chip making use of a metal mesh.
[Fig. 13] It is a graph showing a result of the peeling test.
[Fig. 14] It is an enlarged cross-sectional view of a heat sealing chip onto which a PTFE polymer film adhesive tape is attached.
[Fig. 15] It is a plan view showing a surface of a heat sealing chip on which dimples are formed.
[Fig. 16] (A) is a photo showing a press pattern by the heat sealing chip shown in Fig. 12, (B) is a photo showing a press pattern by the heat sealing chip shown in Fig. 15, (C) is a photo showing a press pattern by a heat sealing chip having horseshoe-shaped protrusions, and (D) is a photo showing a press pattern by a heat sealing chip having oval-shaped protrusions.
[Fig. 17] (A) is a photo showing a surface of a heat sealed portion (short time heat sealing) by a heat sealing chip of a comparative example, and (B) is a photo showing a surface of a heat sealed portion (long time heat sealing).

### DESCRIPTION OF EMBODIMENTS

Hereinafter, embodiments will be explained with reference to the drawings. Note that identical and equivalent components will be labeled with identical reference numbers, and their redundant explanations will be omitted. In addition, dimensions and proportions of the components in the drawings may be different from their actual dimensions and proportions.

First, a secondary battery making use of a packed electrode(s) will be explained. Subsequently, a heat sealing machine for manufacturing the packed electrode, and a method for manufacturing a packed electrode that uses the machine will be explained.

### (Secondary Battery)

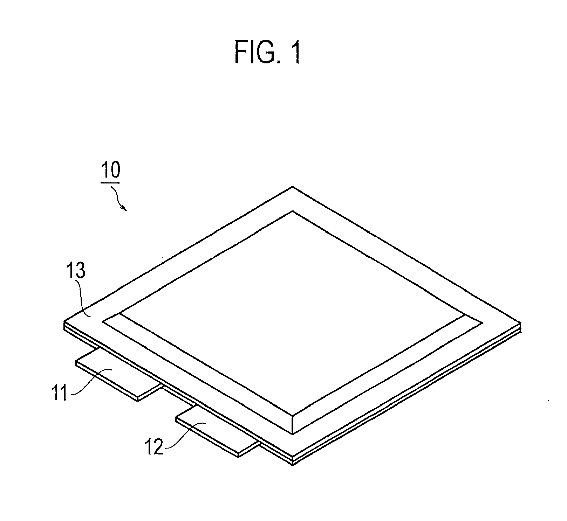

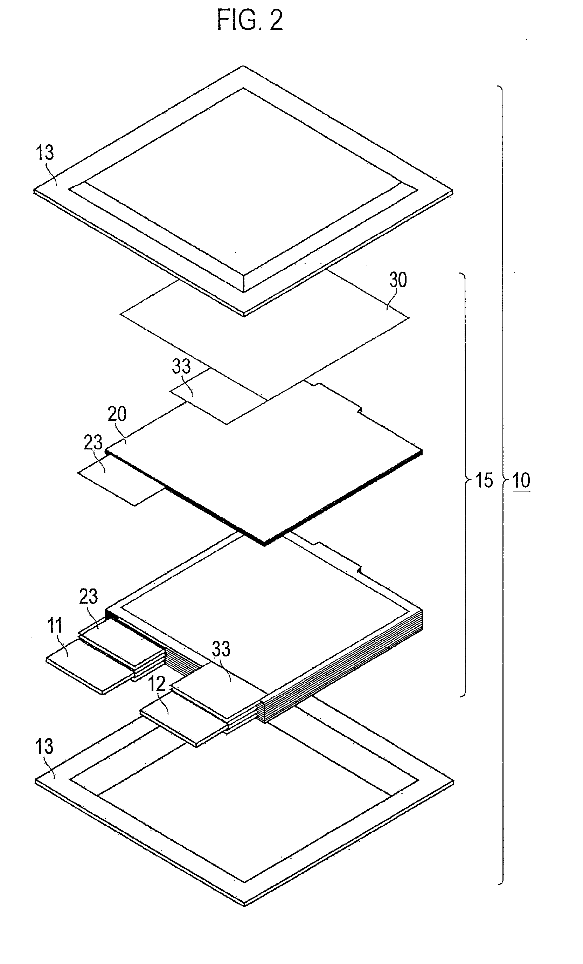

As shown in Fig. 1, a secondary battery 10 has a rectangular flat shape. A cathode lead 11 and an anode lead 12 are led out from an edge of an outer cover 13 of the secondary battery 10. A power-generation element (battery element: assembled laminate) 15 is packed within the outer cover 13, and charge and discharge reactions occur in the power-generation element 15. As shown in Fig. 2, the power-generation element 15 is configured by stacking packed cathodes 20 and anodes 30 alternately. The packed cathode 20 and the anode 30 have rectangular shapes.

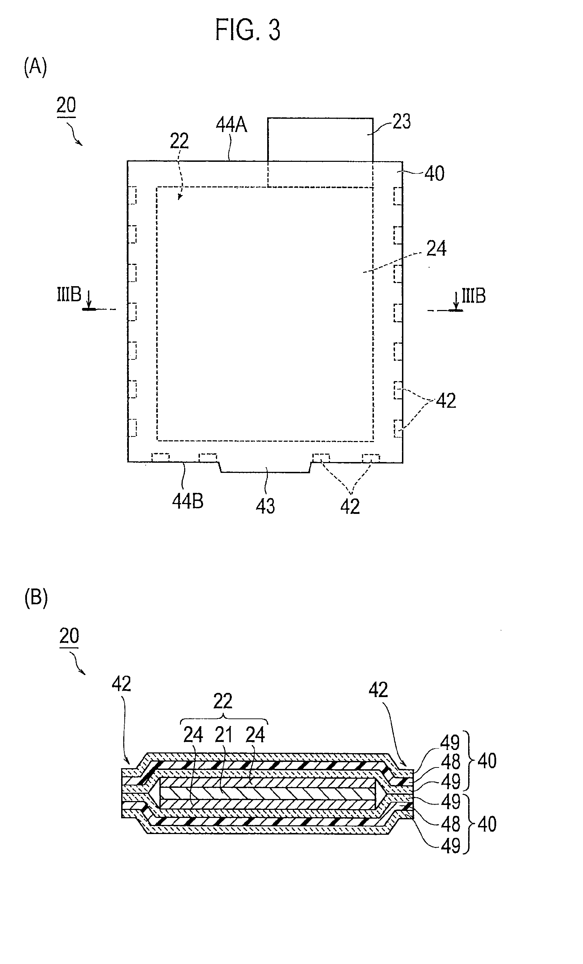

As shown in Fig. 3(A) and (B), the packed cathode 20 has a structure in which a cathode 22 are sandwiched between two sheets of separator 40 and edges of the two sheets of the separator 40 are fastened. Namely, the assembled packed cathode 20 has a structure in which the cathode 22 is packed in an envelope of the paired separators 40.

Each of the separators 40 has a three layer structure in which heat -resistant layers 49 made of ceramic (heat-resistance material) are coated on both surfaces of a separation layer 48 made of resin, respectively. Namely, The heat-resistance layer(s) 49 is interposed between the separation layer 48 and the cathode 22. The separator 40 in the present embodiment possesses heat-resistance property by integrating the heat-resistant layers 49 (heat-resistant separator). The separation layer 48 is formed of polyolefin microporous resin such as polyethylene and polypropylene, for example.

The cathode 22 is constituted by forming cathode active material layers 24 on both surfaces of a thin sheet-shaped cathode current collector 21 (current collector foil), respectively. Note that the cathode active material layers 24 are not formed on a cathode tab 23.

Two sheets of the separators 40 are fastened (heat-sealed) with each other at fastened portions 42 on circumferential edges to form an envelope (hereinafter, also referred as a separator envelope 40). Therefore, each of the separators 40 is larger than the cathode 22 (excluding the cathode tab 23). A manufacturing method of the packed cathode 20 will be explained later. In addition, the cathode tab 23 is led out from a straight edge 44A of the separator envelope 40, and a partially-protruded joint portion 43 is formed on an edge 44B opposed to the edge 44A. The joint portions 43 are jointed with the outer cover 13, and thereby the power-generation element 15 is fixed with the outer cover 13.

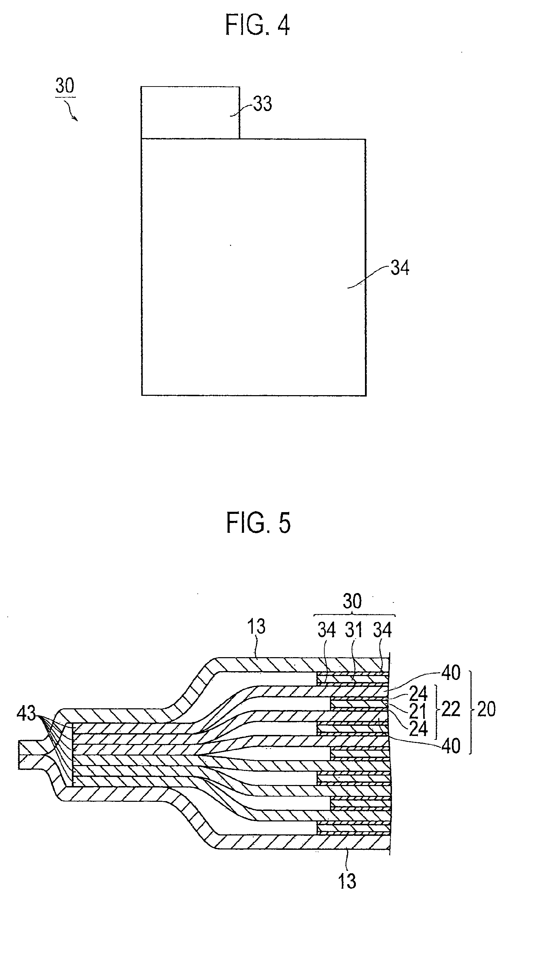

As shown in Fig. 4, the anode 30 is constituted by forming anode active material layers 34 on both surfaces of a thin sheet-shaped anode current collector 31 (current collector foil), respectively. Note that the anode active material layers 34 are not formed on an anode tab 33.

As shown in Fig. 5, the power-generation element 15 are constituted by stacking the anodes 30 and the packed cathodes 20 alternately, and the separator 40 is interposed between the anode 30 and the cathode 22, respectively. A cutting plane of an edge (the joint portions 43) of the power-generation element 15 is shown in Fig. 5, and the joint portions 43 are sandwiched-by and jointed-with the outer cover 13 when sealing the outer cover 13. The stacked cathode tabs 23 are connected with the cathode lead 11, and the stacked anode tabs 33 are connected with the anode lead 12 (see Fig. 2). Note that the three layer structure of the separator 40 (the separation layer 48 and the heat-resistant layers 49) is not shown in Fig. 5. The anode active material layers 34 of the anode 30 are formed slightly larger than the cathode active material layers 24 of the cathode 22 (see Fig. 5).

Since a conventional method is used as a method for manufacturing a lithium-ion secondary battery by stacking the packed cathodes 20 and the anodes 30 alternately, detailed explanations of this process are omitted. In addition, since materials conventionally used for a lithium-ion secondary battery are used for the cathode active material, the anode active material, the current collector foil and so on, detailed explanations of these materials are omitted

### (Heat Sealing Machine)

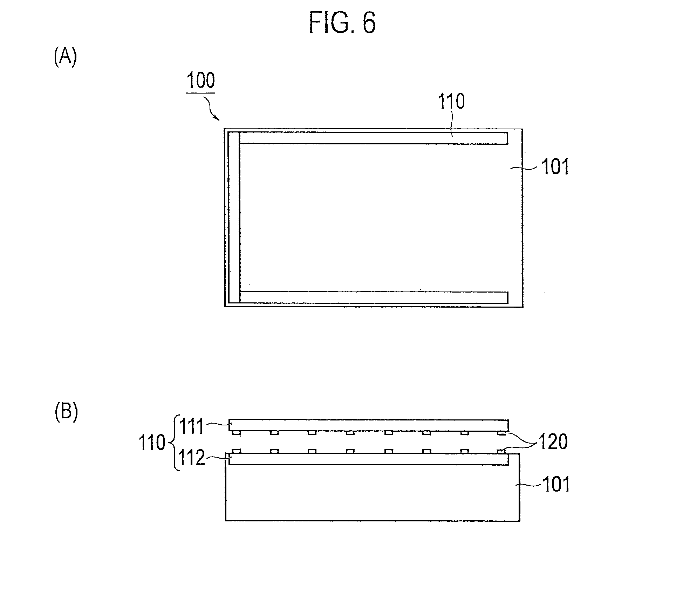

As shown in Fig. 6(A) and (B), a heat sealing machine 100 includes a stage 101 on which a workpiece is laid, and heat sealing units 110 provided along three circumferential edges of the stage 101. The workpiece is a set in which a separator 40, a cathode 22 and another separator 40 are stacked. The heat sealing units 110 are disposed outside the cathode 22, but disposed inside the circumferential edges of the separators 40. The heat sealing unit(s) 110 includes an upper head 111 and a lower head 112 for pinching two sheets of the separators 40 and pressing/heating them to heat-seal them with each other. At least one of the upper head 111 and the lower head 112 (only the upper head 111 in the present embodiment) is constituted so that it can be moved vertically. The upper heads 111 are waited above when the workpiece is carried in, and the upper heads 111 are moved downward toward the lower heads 112 when heat-sealing it. As a result, pressures are applied to portions that are to become the fastened portions 42 of the two sheets of the separators 40. Note that the heat sealing machine 100 includes also a holding device(s) (not shown) for holding the workpiece in order to prevent misalignment of the workpiece when heat-sealing it. The holding device(s) may be provided at any position as long as it doesn't inhibit heat-sealing.

As shown in Fig. 6(B), heat sealing chips 120 are provided at positions, on the upper head 111 and the lower head 112, associated with heat-sealed positions (positions at which the fastened portions 42 are to be formed: see Fig. 3(A)). In the present embodiment, the upper head 111 is moved vertically, and the lower head 112 is not moved. Therefore, the heat sealing chips 120 may be formed directly at positions corresponding to the lower head 112 along the circumferential edges of the stage 101 (the lower head 112 may be integrated with the stage 101).

Each of the heat sealing chips 120 is made of metal such as copper, stainless steel and iron in whole, for example, and has a built-in heat generator (electrical heater). The heat sealing chip 120 is heated wholly by the heat generator. A rugged surface 125 is formed on at least one of opposed heat sealing chips 120 (formed on each of the heat sealing chips 120 on the lower head 112 in the present embodiment).

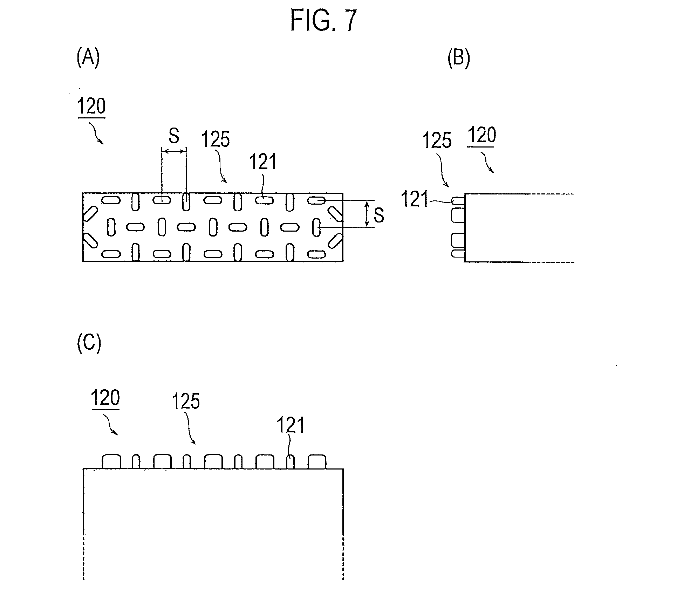

As shown in Fig. 7(A) to (C), the rugged surface 125 is formed by providing minute protrusions 121 on a surface of the heat sealing chip 120 having the rugged surface 125 (a contact surface with the separator 40). A size and a height of each protrusion 121 and a distance between neighboring protrusions 121 are changed according to a thickness of the separation layer 48 and a thickness of the heat resistant layer 49 of the separator 40 that are to be heat-sealed. A height of the protrusion 121 is made, at least, equal-to or higher-than a thickness of the heat resistant layer 49, and preferably made equal-to or higher-than a thickness of the separator 40.

Although explained later, a function of the protrusions 121 is to apply pressures to the heat resistant layers 49 and partially destroy them in minute areas. Therefore, when a height of the protrusion(s) 121 is, at least, equal-to or higher-than a thickness of the heat resistant layer 49, the protrusion(s) 121 digs into the heat resistant layers 49 in combination with flexibility (elasticity) of the separation layer 48, and then destroys the heat resistant layers 49. In addition, when a height of the protrusion(s) 121 is equal-to or higher-than a thickness of the separator 40, a digging stroke of the protrusion(s) 121 becomes larger, and thereby the heat resistant layers 49 can be destroyed surely.

Note that a height of the protrusion(s) 121 is not limited when the rugged surface 125 (the protrusions 121) is formed only one of the heat sealing chips 120, and a height almost twice as large as a thickness of the separator 40 is enough for it. It is because the protrusions 121 are supported by a flat surface of another of the heat sealing chips 120 on which the rugged surface 125 is not formed and thereby don't dig excessively when pinching two sheets of the separators 40 by a pair of the heat sealing chips 120 opposed to each other.

On the other hand, also in a case where the rugged surfaces 125 (the protrusions 121) are formed on both of paired and opposed heat sealing chips 120 and ends of the protrusions 121 are contacted with each other, a height of the protrusion(s) 121 is not limited for the similar reason for the same reason. However, in a case where ends of the protrusions 121 are not contacted with each other, a height of the protrusion(s) 121 should be limited so as not to tear the separators 40 due to excessive digging. In this case, by making each height of the opposed protrusions 121 almost as large as a thickness of the separator 40, the heat resistant layers 49 can be destroyed surely without breaking the separators 40.

In addition, a top end of the protrusion(s) 121 is formed so as not to have a sharp shape, but formed so as to have a rounded shape or a chamfered shape. The top end of the protrusion 121 deforms the separators 40, but may damage the separators 40 if it is formed so as to have a sharp shape. Therefore, the top end of the protrusion 121 is formed so as to have a shape that doesn't damage the separators 40.

A plan-view shape of the protrusion 121 is oval (rectangular with its corners rounded) in the present embodiment, but may be circular or ellipsoidal. With respect to arrangements of the protrusions 121, it is preferable that the oval-shaped protrusions 121 are arranged in a bidirectionally (perpendicularly) staggered pattern as shown in Fig. 7(A). Although explained later, according to this configuration, the separation layers 48 can be heat-sealed efficiently while destroying the heat-resistant layers 49.

The protrusions 121 may be formed as arch-shaped protrusions, woven-texture minute protrusions, or long straight protrusions. In addition, the rugged surface 125 may not be formed by the protrusions 121, but may be formed by minute circular dimples, for example.

### (Method for Manufacturing Packed Electrode)

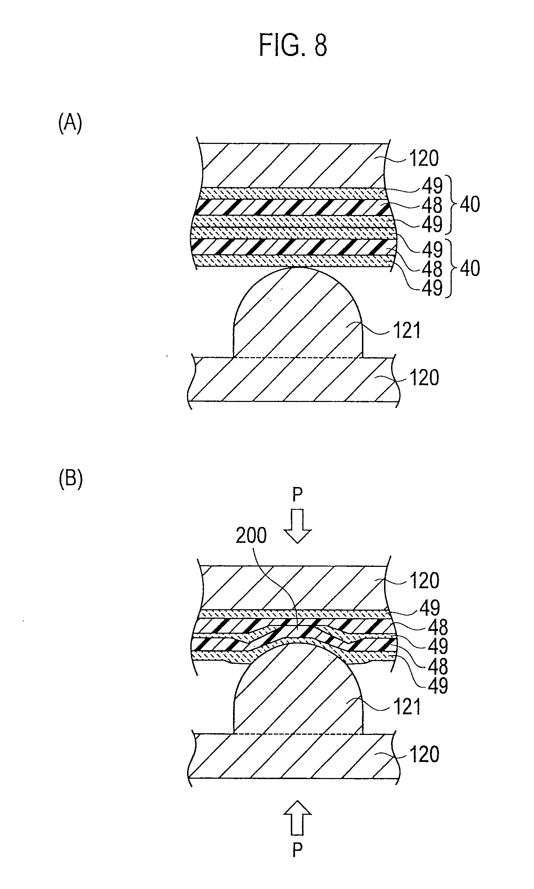

An embodiment for manufacturing method for a packed electrode by using the above-explained heat sealing machine 100 will be explained. As shown in Fig. 8(A) and (B), the protrusions 121 are formed only on the heat sealing chips 120 of the lower head 112 in the present embodiment.

First, a structure of the separator 40 and its fastened portion(s) 42 will be additionally explained. The separator 40 has a three layer structure composed of the separation layer 48 and the heat-resistant layers 49 coated on both surfaces thereof, as shown in Fig. 3(B). The separation layer 48 is made of polyolefin resin, for example. As commonly known, ions can pass through the separation layer 48, but the separation layer 48 is not electrically conductive. The separation layer 48 melts at about 130 to 180 °C.

On the other hand, the heat-resistant layer 49 is made of microporous ceramic, for example. Electrolytic solution can permeate the heat-resistant layer 49. The separation layers 48 of the overlapped separators 40 are not made contacted with each other by the heat-resistant layers 49. The heat-resistant layer(s) 49 is an electric insulator. Upper temperature limit of the heat-resistant layer 49 is equal-to or higher-than 800 °C, and never melts or deforms at the temperature at which the separation layer 48 melts, e.g. about 180 °C. The heat-resistant layer 49 prevents the cathode 22 and the anode 30 on both sides of the separation layer 48 from being contacted with each other due to heats generated by internal electrical short-circuits of the secondary battery 10.

In order to pack a cathode 20 by heat-sealing edges of two sheets of the separators 40, it is not enough to melt only the two sheets of the separation layers 48 by applying heats to them, so that the edges are not heat-sealed due to existences of the heat-resistant layers 49 between the separation layers 48 of the two sheets of the separators 40. On the other hand, if applying heats excessively (at excessively high temperature, or for an excessively long time), it is impossible to heat-seal them due to alterations of the separation layers 48.

Therefore, by using the above-explained heat sealing machine 100 in the present embodiment, the heat-resistant layers 49 are destroyed in minute areas by being pressed by the heat sealing chips 120 having the rugged surfaces 125, and the separation layers 48 are heat-sealed by being applied with heats (the heat-sealed portions become the fastened portions 42). Hereinafter, a method for manufacturing a packed electrode will be explained.

First, as shown in Fig. 8(A), a workpiece in which a separator 40, a cathode 22 and another separator 40 are sequentially stacked is laid on the stage 101. Circumferential edges (overlapped portions) at which the two sheets of the separators 40 are overlapped outside the cathode 22 are pinched by the upper head 111 and the lower head 112, and then pressed (see white arrows P in Fig. 8(B)). As a result, minute destroys (breaks) are generated at portions of the heat-resistant layers 49 that are pressed by the heat sealing chips 120, and thereby the separation layers 48 of the two sheets of the separators 40 are contacted with each other at the destroyed portions 200 of the heat-resistant layers 49.

After pressing (or in parallel with pressing), the heat sealing chips 120 are heated to melt the separation layers 48, and then the separation layers 48 are heat-sealed through the destroyed portions 200. Heating temperature may vary according to materials of the separation layers 48, but is 130 to 180 °C for polyolefin resin. The heating is stopped before the resin of the separation layers 48 is lost due to meltdown (the heat sealing chips 120 are separated away). Fastening is completed when the separation layers 48 get solidified, so that the two sheets of the separators 40 can be surely fastened at their circumferential edges.

Timings for pressing and heating are not limited especially, but it is preferable that they are made in parallel, or that pressing is slightly preceded and then heating is made. According to this, the separation layers 48 are melted and heat-sealed in-parallel-with or after the destructions of the heat-resistant layers 49 due to pressing. Note that it is possible that heating is preceded and then pressing is made, and, in this case, pressing is made before the resin of the separation layers 48 is lost due to meltdown by heating and heating is stopped before the resin is lost (the heat sealing chips 120 are separated away). According to this, the two sheets of the separators 40 can be fastened.

### [Practical Examples]

In practical examples explained below, two sheets of the separators 40 each of which is formed by coating the heat-resistant layers (ceramic) 49 on both surfaces of the separation layer (polyolefin resin) 48, respectively, are heat-sealed with each other by the heat sealing chips 120 on which the rugged surfaces 125 are formed. In addition, in comparative examples, the rugged surface 125 is not formed. Two sheets of the separators 40 are heat-sealed by heat sealing chips 120 each having a flat surface on which the rugged surface 125 is not formed.

In a first practical example, the rugged surface 125 is formed by providing the minute protrusions 121 on each surface of the heat sealing chips 120 of the lower heads 112. A total thickness of one sheet of the separator 40 is about 25 µm. Three layers (one separation layer 48 and two heat-resistant layers 49) in the one sheet of the separator 40 have an identical thickness, respectively. Each size of the heat sealing chips 120 is 4 mm × 2 mm. Each of the protrusions 121 forming the rugged surface 125 has an oval shape with a 0.25 mm length and a 0.125 mm width. Each distance S (see Fig. 7 (A)) between centers of the protrusions (oval shapes) 121 is 0.4 mm.

Heat-sealing processes of the separators 40 will be explained below.
(1) A workpiece in which a cathode 22 is sandwiched between separators 40 is laid on a predetermined position.
(2) The workpiece is held at its positions other than fastened portions 42 (portions to be heat-sealed).
(3) The workpiece is pinched by pairs of heat sealing chips 120 outside the cathode 22 and inside from circumferential edges of the separators 40 (at positions where the two sheets of the separators 40 are directly overlapped), and then pressed. Pressing is made with a pressure capable of making the heat resistant layers 49 destroyed.
(4) The heat sealing chips 120 on the upper head 111 and the lower head 112 are heated. Heating temperature is 180 °C.
(5) Before the fastened portions 42 get perforated or the fastened portions 42 are lost due to meltdown, the heat sealing chips 120 of the upper head 111 are separated away from the separator 40 to finish heating (time to the perforation or the meltdown is obtained by experimentally (empirically)).
(6) Holding made by the above (2) is released.

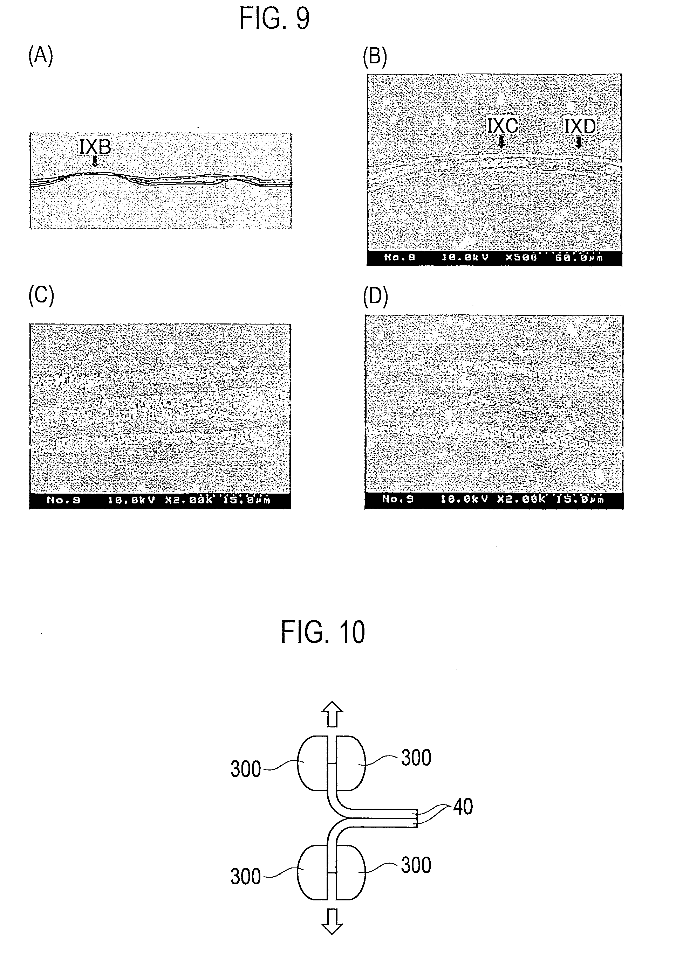

The fastened portion(s) 42 of a packed cathode 20 formed as explained above was observed by an optical microscope and an electronic microscope. Fig. 9(A) is a photo of the fastened potion 42 taken by the optical microscope. Fig. 9(B) is a photo of a portion IXB (heat-sealed portion) in Fig. 9(A) taken by the electronic microscope. Fig. 9(C) is a photo of a portion IXC in Fig. 9(B) further enlarged by the electronic microscope, and a photo of a portion IXD in Fig. 9(D) further enlarged by the electronic microscope.

As shown in Fig. 9(A) to Fig. 9(D), the heat resistant layers 49 are partially destroyed (the destroyed portions 200: see Fig. 8(B)) by the rugged surface 125 on which the minute protrusions 121 are formed, and the separation layers 48 made of resin are heat-sealed with each other at the destroyed portions 200 (especially see Fig. 9(D)).

In addition, in an entire of the heat-sealed portion (portion IXB) as shown in Fig. 9(B), there are portions in which the heat-resistant layers 49 are destroyed (see Fig. 9(C)) and portions in which they are not destroyed (see Fig. 9(D)). Therefore, a peeling test of the two sheets of the separators 40 is made by using a cut-out sample of the portion shown in Fig. 9(C) in which the heat-resistant layers 49 are not destroyed. The peeling test is made by peeling the heat-sealed portion while holding both sides of the heat-sealed portion (fastened portion 42) by chucks 300 as shown in Fig. 10.

As a result of the peeling test, with respect to the sample of the portion in which the heat-resistant layers 49 are not destroyed, the two sheets of the separators 40 are separated away from each other by 0.02 N. On the other hand, an identical peeling test is made by using a cut-out sample of a whole of the fastened portion 42. In this case, the two sheets of the separators 40 are separated away from each other by 0.2 to 0.4 N. Therefore, it is possible to get sufficient fastened strength as a whole of the fastened portion 42 by partially destroying the heat-resistant layers 49 and partially heat-sealing the separation layers 48.

As explained above, the heat-sealed portions can be formed by pressing and heating the heat-resistant layers 49 coated on the separation layer 48 to contact the separation layers 48 made of resin in the two sheets of the separators 40 with each other.

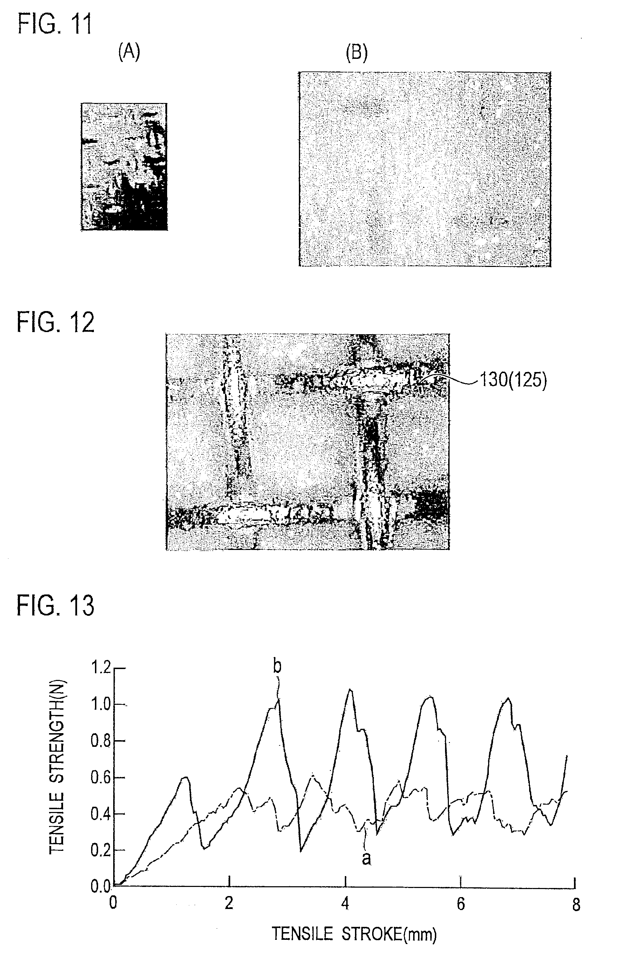

Fig. 11 (A) is a photo of a surface of the fastened portion 42 (a surface on a side of the lower head 112) in the above-explained first practical example taken by an electronic microscope. Fig. 11 (B) is a photo thereof taken by a laser microscope. As shown in Fig. 11(A) and Fig. 11(B), a press pattern is formed along a longitudinal direction and a lateral direction on the surface of the fastened portion 42 heat-sealed by the heat sealing chips 120 in the first practical example. The press pattern forms asperity on the surface of the fastened portion 42. This press pattern is characterized in its arrangement with constant distances, and splintery pieces of the destroyed portions 200 in the heat-resistant layer 49 are moved aside and then the destroyed portions 200 are fastened (heat-sealed).

Next, a second practical example that can bring equivalent advantages to those in the first practical example will be explained. In the present practical example, a rugged surface 125 is formed with a metal mesh 130 attached onto a flat surface of a heat sealing chip 120. Fig. 12 is a photo, taken by a laser microscope, of the surface of the heat sealing chip 120 onto which the metal mesh 130 is attached.

Also in the present practical example, the metal meshes 130 are attached only to (the rugged surfaces 125 are formed only on) the heat sealing chips 120 provided on the lower head 112. Wavings of wires in the metal mesh 130 form the minute protrusions 121. A packed cathode 20 (fastened portion(s) 42 of the separators 40) is made also in the present practical example, and a peeling test of a whole of the fastened portion 42 is made similarly to the first practical example. Fig. 13 is a graph (tensile stroke - tensile strength) showing a result of the peeling test. A line *a* in the graph indicates a sample with two seconds of heating time after pressing, and a line *b* indicates a sample with seven seconds of heating time. Configurations of the samples and other conditions are identical to those in the first practical example.

As shown in Fig. 13, in cases where the metal meshes 130 are used, it is possible to get sufficient peeling strength, e.g. 0.3 to 0.6 N by two seconds of heating time and 0.2 to 1.0 N by seven seconds of heating time. Further, when varying a mesh size of the metal mesh 130, it turns out that 40 mesh/inch is preferred to form the fastened portion 42 with strong peeling strength. In addition, it turns out that 60 mesh/inch is preferred to form the fastened portion 42 with superior anti-perforation but with slightly weaker peeling strength. An attachment of the metal mesh 130 onto the heat sealing chip 120 can be done by soldering or welding.

Next, a third practical example will be explained. In the present practical example, a packed cathode 20 (fastened portion(s) 42 of the separators 40) is made similarly to the first practical example, but a material of the heat sealing chip(s) 120 is changed. In a case where the heat sealing chip 120 is made of copper having high thermal conductivity, it turns out that a peeling strength becomes high but its volatility becomes large depending on the distance S of the protrusions 121 or pressing force, and that the fastened portion 42 tends to be perforated. On the other hand, in a case where the heat sealing chip 120 is made of stainless steel (SUS) having low thermal conductivity, it turns out that the fastened portion 42 is hardly perforated. In view of these results, conditions such as a size of the protrusion(s) 121 on the heat sealing chip 120, heat-sealing temperature, and heat-sealing time should be determined appropriately in consideration of a material of the heat sealing chip 120.

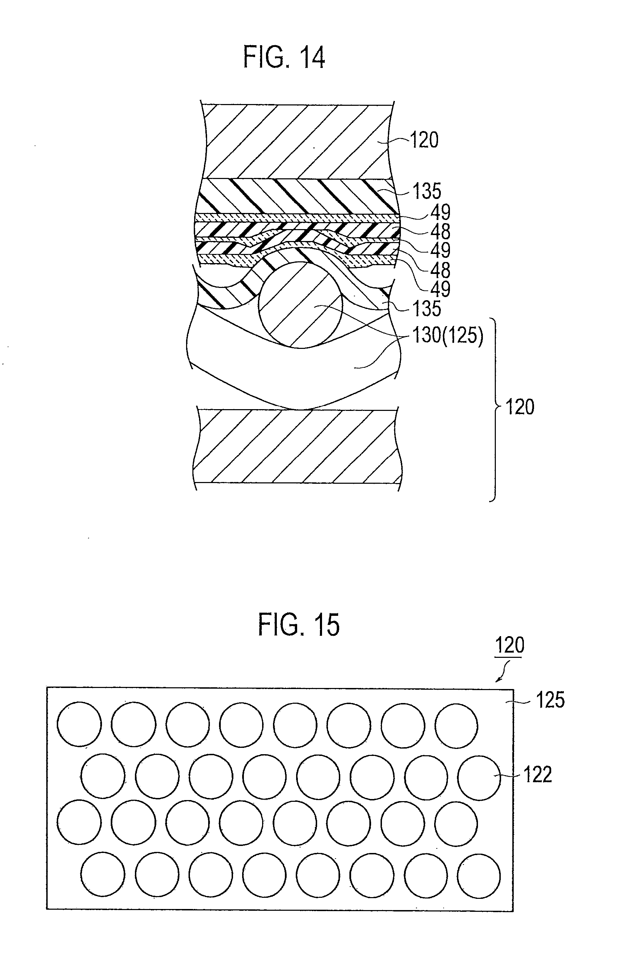

Next, a fourth practical example will be explained. In the present practical example, a tetrafluoroethylene (PTFE: polytetrafluoroethylene) polymer film (heat-resistant film) adhesive tape (hereinafter, merely referred as a PTFE tape) is further attached onto the metal mesh 130 attached on the heat sealing chip(s) 120 of the lower head 112 in the second practical example. Note that the PTFE tape is also attached onto a flat surface of the heat sealing chip(s) 120 of the lower head 112. Fig. 14 is an enlarged cross sectional view of the heat sealing chips 120 onto which the PTFE tapes 135 are attached, respectively. A thickness of the PTFE tape 135 is 0.08 to 0.23 mm.

The PTFE tape 135 has lower thermal conductivity than that of metals. Therefore, no perforation occurs even when extending heat-sealing time. This is because the melted separation layers 48 and the heat sealing chips 120 are prevented from being heat-sealed with each other by the PTFE tapes 135. Thus, heat-sealing strength can be improved by longer heating time than that in the second practical example. In addition, since the PTFE tape 135 also brings an impact absorption effect, pressing of the heat sealing chips 120 onto the separators 40 can be made strong and thereby this can also improve the heat-sealing strength.

Next, a fifth practical example will be explained. In the present practical example, the rugged surface 125 is formed by forming dimples 140 on a surface of the heat sealing chip(s) 120 of the lower head 112. Fig. 15 is a plan view of the heat sealing chip 120 on which the dimples 140 are formed. As shown in Fig. 15, the dimples 140 are arranged with regularity on the surface of the heat sealing chip 120 (contact surface with the separator 40). Also according to the present practical example, peeling strength as strong as that by the first practical example can be brought.

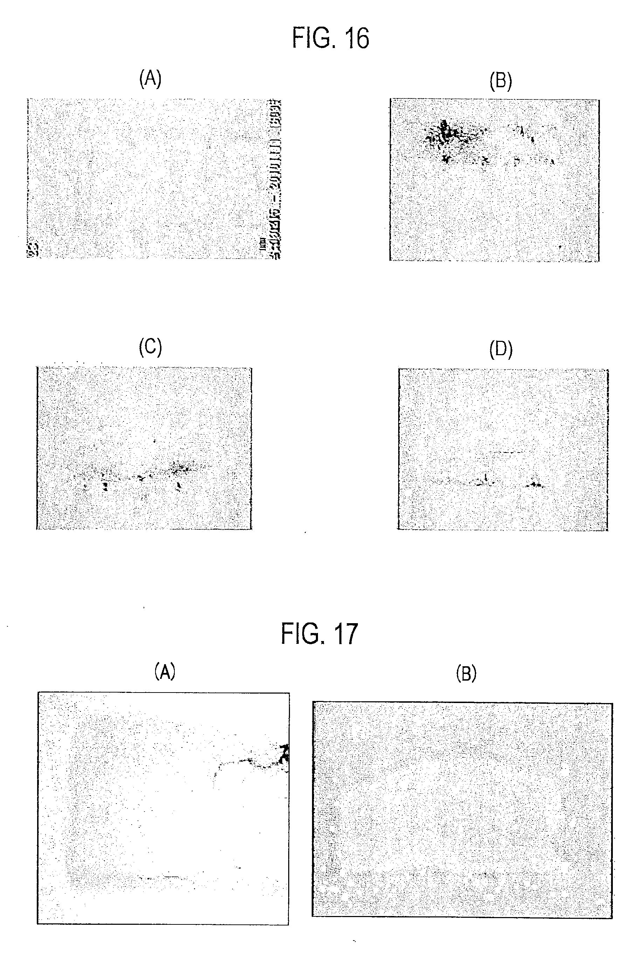

In addition, as other practical examples, it is possible to form the fastened portion 42 having sufficient peeling strength by using the heat sealing chip 120 that has horseshoe-shaped or oval-shaped protrusions 121 whose pressing area is larger than that in the above first practical example and thereby has a large contact area with the separator 40. Photos of the press patterns of the fastened portion 42 of the above-explained practical examples taken by an optical microscope are shown in Fig. 16(A) to Fig. 16(D). Fig. 16(A) shows the first practical example in which the rugged surface 125 is formed by the metal mesh 130. Fig. 16(B) shows the fifth practical example in which the rugged surface 125 is formed by the dimples 140. Fig. 16(C) shows the practical example in which the rugged surface 125 is formed by the horseshoe-shaped protrusions 121. Fig. 16(D) shows the practical example in which the rugged surface 125 is formed by the oval-shaped protrusions 121. In any cases, the press pattern is formed on the surface of the fastened portion 42, and thereby the separators 40 are surely fastened (heat-sealed).

Note that good heat-sealing cannot be brought when heat-sealing time or heat-sealing temperature is not appropriate. If heat-sealing temperature is equal-to or higher-than 200 °C, the separation layers 48 melt excessively and thereby it becomes impossible to form the fastened portions 42. In addition, since the separation layers 48 shrink due to their melting, twists and winkles may occur. Therefore, it is preferable that heat-sealing temperature is lower than 200 °C.

In addition, according to long heat-sealing time, strength of the fastened portion 42 may become strong, but adherence of the separators 40 onto the heat sealing chips 120 and incrementation of perforations and winkles may occur. With respect to heat-sealing of the separators 40 with 25 µm of a thickness, perforations may occur when contacting time with the heat sealing chips 120 becomes equal-to or longer-than 0.3 sec. Therefore, it is preferable that heat-sealing time is shorter than 0.3 sec.

As explained above, it is preferable that the best heat-sealing condition is set appropriately according to a material and a thickness of the separation layer 48, a material of the heat sealing chip 120, a size of the protrusion 121 and so on.

### [Comparative Examples]

For comparison, peeling tests are made with samples in which separators each of which has only a single separation layer and no heat-resistant layer are heat-sealed by flat heat sealing chips 120 on each of which the rugged surface 125 is not formed. Fig. 17(A) and Fig. 17(B) are photos, taken by an optical microscope, showing surfaces of the fastened portions 42 of the comparative samples (including a case where the fastened portion 42 is not formed). As shown in Fig. 17(A), a partial tear is made in the heat-resistant layers 49, and the separation layers 49 melt but two sheets of the separators 40 cannot be fastened (heat-sealed).

When extending heat-sealing time further, as shown in Fig. 17(B), perforation occurs due to meltdown and tear. The separators 40 partially attach onto the heat sealing chips 120, and thereby perforation occurs. When making temperature higher than the heat-sealing temperature (temperature slightly higher than 200 °C), perforation occurs due to meltdown, and thereby two sheets of the separators 40 cannot be fastened (heat-sealed). In addition, when making pressure higher, perforation occurs, and thereby two sheets of the separators 40 cannot be fastened (heat-sealed). Perforation in the case of making temperature or pressure higher is almost the same as the perforation shown in Fig. 17(B).

(1) According to the above embodiments (practical examples), the heat-resistant layers 49 pressed by the rugged surfaces 125 are destroyed at the overlapped portions of the separators 40 pressed by the rugged surfaces 125 of the heat sealing chips 120. The destroyed heat-resistant layers 49 are heated, and thereby the separation layers 48 at the heated portions are melted. As a result, melted resin of the separation layers 48 and splintery pieces of the heat-resistant layers 49 are mixed and fastened (heat-sealed) to form the fastened portions 42. The circumferential edges of the two sheets of the separators 40 of the packed electrode (the packed cathode 20 in the above embodiments) can be fastened (heat-sealed) surely.
(2) Each top end of the protrusions 121 provided on the rugged surfaces 125 of the heat sealing chips 120 is formed to have a rounded shape or a chamfered shape. Therefore, the separators 40 are not torn when the separators 40 are pinched and pressed.
(3) Used is the heat sealing chip(s) 120 whose rugged surface 125 is formed by attaching the metal mesh 130. Therefore, pressure applied to the separators 40 is decentralized, and thereby it becomes possible to deform the separators 40 without cutting them off.
(4) Used is the heat sealing chip(s) 120 provided with a polymer film having lower thermal conductivity than that of metals on a surface of its rugged surface 125. According to this, it becomes possible to restrict rapid heat transfer to the separators 40 (especially, to the separation layers 48 made of resin). Therefore, perforation doesn't occur when heat-sealing time is extended. In addition, pressing load is lessened by an elastic force of the polymer film, and thereby it becomes possible to prevent a big tear from occurring in the heat-resistant layers 49 when making pressing force larger.
(5) Heat-sealing can be done with low energy by making heating temperature lower than 200 °C, so that it becomes possible to prevent the separation layers 48 from being carbonized and vaporized.
(6) Used is the separator(s) 40 in which the heat-resistant layer 49 is preliminarily formed on at least one surface of the separation layer 48. According to this, when manufacturing the packed electrode (packed cathode) 20 by stacking the separator 40 - the cathode 22 - the separator 40, handling such as carrying can be done more easily than a case where the separation layer 48 and the heat-resistant layer 49 are separated members independent from each other. In addition, it becomes possible to carry out the stacking process easily, and thereby man-hours required for stacking can be reduced.
(7) Especially, used is the separator(s) 40 in which the heat-resistant layers 49 are preliminarily formed on both surfaces of the separation layer 48. According to this, it becomes possible to improve an effect for preventing the separation layer(s) 48 from melting down due to heats generated by internal electrical short-circuits. In addition, it becomes possible to carry out the stacking process easily, and thereby man-hours required for stacking can be reduced.
(8) In the packed electrode 20, the heat-resistant layers 49 are destroyed at the above-explained overlapped portions, and thereby the fastened portions 42 that fasten the separation layers 48 at the destroyed portions 200 are formed. Therefore, when manufacturing the secondary battery 10 by making use of these packed electrodes 20, it becomes possible to handle the packed electrodes 20 easily. In addition, when handling the secondary battery 10 making use of these packed electrodes 20, the electrodes 22 in the packed electrodes 20 can be held surely.
(9) The press pattern having asperity is formed on the surface of the above-explained fastened portion(s) 42. Therefore, it becomes possible to judge, unfailingly, whether or not the separators 40 are fastened (heat-sealed) with each other only by watching them.
(10) The power-generation element 15 of the secondary battery 10 is formed by making use of the packed electrodes 20 explained in the above item (8) or (9). Therefore, when vibrations are applied, the electrodes 22 in the packed electrodes 20 can be held surely. Thus, this secondary battery 10 is suitable for a power unit for driving an electric vehicle or a hybrid electric vehicle. Although vibrations are applied to a secondary battery installed on a vehicle, it is possible to provide the secondary battery 10 impervious to vibrations.
(11) In the heat sealing machine 100, the rugged surface 125 is formed on a surface of at least one of at least one pair of heat sealing chips 120 used for manufacturing the above-explained packed electrode 20. According to this, the heat-resistant layers 49 pressed by the rugged surface 125 are destroyed at the overlapped portions of the separators 40 pressed by the rugged surface 125 of the heat sealing chips 120. The destroyed heat-resistant layers 49 are heated, and thereby the separation layers 48 at the heated portions are melted. As a result, melted resin of the separation layers 48 and splintery pieces of the heat-resistant layers 49 are mixed and fastened (heat-sealed) to form the fastened portions 42. The circumferential edges of the two sheets of the separators 40 of the packed electrode (the packed cathode 20 in the above embodiments) can be fastened (heat-sealed) surely.
(12) In the heat sealing machine 100, the rugged surface 125 has the plural protrusions 121, and each top end of the protrusions 121 is formed to have a rounded shape or a chamfered shape. Therefore, the separators 40 are not torn when the separators 40 are pinched and pressed.
(13) In the heat sealing machine 100, the rugged surface 125 is formed by the metal mesh 130. Therefore, pressure applied to the separators 40 is decentralized, and thereby it becomes possible to deform the separators 40 without cutting them off.
(14) In the heat sealing machine 100, the rugged surface 125 has the heat-resistant film on its surface. According to this, it becomes possible to restrict rapid heat transfer to the separators 40 (especially, to the separation layers 48 made of resin). Therefore, perforation doesn't occur when heat-sealing time is extended. In addition, pressing load is lessened by an elastic force of the polymer film, and thereby it becomes possible to prevent a big tear from occurring in the heat-resistant layers 49 when making pressing force larger.
(15) In the heat sealing machine 100, heating temperature is made lower than 200 °C. According to this, it becomes possible to do heat-sealing with low energy, so that it becomes possible to prevent the separation layers 48 from being carbonized and vaporized.

The present invention is not limited to the above embodiments (practical examples). For example, a packed electrode is the packed cathode 20 in the above embodiments, but may be a packed anode in which the anode 30 is packed.

In addition, the separator 40 has the three layer structure (the heat-resistant layer 49 - the separation layer 48 - the heat-resistant layer 49) in the above embodiments, but may have a two layer structure in which the heat-resistant layer 49 is formed only on one surface of the separation layer 48. A function of the heat-resistant layer 49 is to prevent the cathode 22 and the anode 30 from contacting with each other when internal electrical short-circuits occurs as explained above. Therefore, even by stacking the packed cathodes 20 by making use of the separators 40 having the above two layer structure and the anodes 30, it is possible to interpose the heat-resistant layer 49 between the cathode 22 and the anode 30.

In a case of using the separators 40 having the two layer structure, two sheets of the separators 40 are fastened (heat-sealed) so that at least one heat-resistant layer 49 is interposed between the separation layers 48 at the fastened portions 42. Namely, a packed electrode is manufactured so that the heat-resistant layer 49 of at least one of two sheets of the separators 40 contacts with an electrode packed inside.

Note that, as a separator having a heat-resistant layer, the separator 40 having the three layer structure in which the heat-resistant layers 49 are formed on both surfaces of the separation layer 48 made of resin is most preferable.

In the above embodiments, the plural fastened portions 42 are formed at intervals. The heat sealing chips 120 are provided in conformity to positions and size of the fastened portions 42. However, positions and size of the fastened portions 42 is not limited to those in the above embodiments. For example, a long heat sealing chip(s) 120 may be provided along circumferences of the separators 40.

In the above embodiments, the heat-resistant layer is formed by being coated on a surface(s) of the separation layer. However, a separator may be made by laminating a separation layer and a heat-resistant layer that are made separately and independently from each other. In this case, when manufacturing a packed electrode, it can be done to stack the separation layer, the heat-resistant layer and an electrode and then fasten (heat seal) their circumferential edges. Namely, the separator is made by fastening the separation layer and the heat-resistant layer in parallel with manufacturing of the packed electrode. According to this, it becomes possible to manufacture a packed electrode having a heat-resistant layer by making use of a already-existing separation layer (that doesn't have a heat-resistant layer).

In the above fourth practical example, the polymer film is attached onto the metal mesh 130. Similarly, equivalent advantages to those by the fourth practical example can be brought by attaching the polymer film having low thermal conductivity onto the rugged surface 125 that doesn't have the metal mesh 130. In addition to the above-explained modified examples, the present invention can be modified variously based on configuration described in Claims, and it goes without saying that such modified examples are within a scope of the present invention.

The entire contents of Japanese Patent Applications 2012-4211 (filed January 12, 2012) are incorporated to this Specification by reference. Although the invention has been described above by reference to certain embodiments of the invention, the invention is not limited to the embodiments described above. Scope of the invention should be defined in view of Claims.

## Claims

1. A method for manufacturing a packed electrode, the method comprising:
setting an electrode between two separation layers that are made of resin;
setting a heat-resistant layer between at least one of the two separation layers and the electrode;
stacking the two separation layers, the electrode and the heat-resistant layer;
pinching, pressing and heating, by a pair of heat sealing chips at an outside of the electrode, an overlapped portion of the two separation layers overlapped with the heat-resistant layer interposed therebetween; and
fastening the two separation layers by destroying the heat-resistant layer at the overlapped portion that are pressed and heated.

2. The method for manufacturing a packed electrode according to claim 1, wherein
a rugged surface having a plurality of protrusions is formed on a surface of at least one of the pair of heat sealing chips, and
each top end of the plurality of protrusions is formed to have a rounded shape or a chamfered shape.

3. The method for manufacturing a packed electrode according to claim 2, wherein
the rugged surface is formed by a metal mesh.

4. The method for manufacturing a packed electrode according to claim 2 or 3, wherein
the rugged surface has, on a surface thereof, a polymer film having lower thermal conductivity than thermal conductivity of metals.

5. The method for manufacturing a packed electrode according to any one of claims 1 to 4, wherein
temperature of the heating is lower than 200 °C.

6. The method for manufacturing a packed electrode according to any one of claims 1 to 5, wherein
the heat-resistant layer is preliminarily formed on a surface of the at least one of the two separation layers.

7. The method for manufacturing a packed electrode according to any one of claims 1 to 6, wherein
the heat-resistant layer is formed on both surfaces of each of the two separation layers.

8. A packed electrode, comprising:
two separation layers that are made of resin;
an electrode set between the two separation layers; and
two heat-resistant layers set between the two separation layers and the electrode, respectively, wherein
a fastened portion is formed at an overlapped portion, outside the electrode, of the two separation layers overlapped with the heat-resistant layer interposed therebetween, the heat-resistant layer being destroyed and the two separation layers being fastened with each other at the fastened portion.

9. The packed electrode according to claim 8, wherein
a press pattern is formed on a surface of the fastened portion.

10. A secondary battery comprising:
a power-generation element formed by stacking a packed electrode according to claim 8 or 9 and an electrode having polarity different from polarity of the packed electrode.

11. A heat sealing machine comprising:
at least one pair of heat sealing chips used for a method for manufacturing a packed electrode according to any one of claims 1 to 7, wherein
a rugged surface is formed on a surface of at least one of the at least one pair of heat sealing chips.

12. The heat sealing machine according to claim 11, wherein
the rugged surface has a plurality of protrusions, and
each top end of the plurality of protrusions is formed to have a rounded shape or a chamfered shape.

13. The heat sealing machine according to claim 11, wherein
the rugged surface is formed by a metal mesh.

14. The heat sealing machine according to any one of claims 11 to 13, wherein
the rugged surface has a polymer film on a surface thereof.

15. The heat sealing machine according to any one of claims 11 to 14, wherein temperature of the heating is lower than 200 °C.
